# EUROPÄISCHE PATENTANMELDUNG

(11) **EP 2 073 351 A1**
(43) Veröffentlichungstag der Anmeldung: **24.06.2009**
(21) Anmeldenummer: 07024404.1
(22) Anmeldetag: 17.12.2007
(51) Int. Cl.: H02K 1/27, H02K 41/03

(54) **Sekundärteil eines Linearantriebs**

(71) Anmelder: SIEMENS AKTIENGESELLSCHAFT, 80333 München (DE)
(72) Erfinder: Vollmer, Rolf, 36129 Gersfeld (DE)

(57) **Zusammenfassung**

Sekundärteil (5) eines Linearantriebs, insbesondere eines zylindrischen oder ebenen Linearantriebs, der auf einem weichmagnetischen Träger (1) Permanentmagnete (2) aufweist, die senkrecht zu der Bewegungsrichtung (6) des Linearantriebs angeordnet sind und zumindest auf der einen dem Primärteil zugewandten Seite gekrümmt ausgeführt sind, und wobei die Permanentmagnetes (2) jeweils nur einen vorgebbaren Teil eines magnetischen Pols τₚ bedecken und wobei die Permanentmagnete (2) eine zu ihrer äußeren Oberfläche (7) gerichtete radiale Magnetisierungsrichtung (9) aufweisen.

## Beschreibung

Die Erfindung betrifft ein Sekundärteil eines Linearantriebs, insbesondere eines zylindrischen oder ebenen Linearantriebs, der auf einem weichmagnetischen Träger Permanentmagnete aufweist, die senkrecht zu der Bewegungsrichtung des Linearantriebs angeordnet ist.

Permanenterregte Linearmotoren sind hinsichtlich Kraftpendelungen äußerst empfindlich, die aufgrund von Relativbewegungen des Primär- und Sekundärteil entstehen. Für die Ausbildung der störenden Kraftpendelungen sind u.a. die Reluktanzkräfte zwischen den Permanentmagneten und den Zähnen des Primärteils, als auch die Wechselwirkung von Sekundär- und Primärmagnetfeldern im Luftspalt verantwortlich. Besonders störend sind dabei die fünfte und siebte Oberwelle der Nutzwelle, des sich im Luftspalt ausbildenden magnetischen Luftspaltfeldes zwischen Primärteil und Sekundärteil einstellt.

Aus der DE 10 2004 045 939 A1 sind mehrere Unterdrückungsmittel beschrieben, um derartige Kraftpendelungen bei rotatorischen permanenterregten Synchronmaschinen zu unterdrücken. Dabei wird u.a. eine Polbedeckung < 1 als auch eine Staffelung der Permanentmagnete oder eine Schrägung der Permanentmagnete oder die Schrägung der Nuten als auch die mehrfache Staffelung von Permanentmagneten eines Pols, der Permanentmagnete oder der Nuten beschrieben.

Neben diesen Möglichkeiten wurden bisher eisenlose Primärteile benutzt, die aber zu einer unzureichenden Ausnutzung der elektrischen Maschine führen.

Ausgehend davon, liegt der Erfindung die Aufgabe zugrunde, einen Linearantrieb zu schaffen, der bei einer vergleichsweise erhöhten Ausnutzung lediglich geringe Kraftpendelungen aufweist, des Weiteren soll der Fertigungsaufwand und damit die Fertigungskosten reduziert werden.

Die Lösung der gestellten Aufgabe gelingt durch ein Sekundärteil eines Linearantriebs, insbesondere eines zylindrischen oder ebenen Linearantriebs, der auf insbesondere einem weichmagnetischen Träger Permanentmagnete aufweist, die insbesondere senkrecht zu der Bewegungsrichtung des Linearantriebs angeordnet sind und zumindest auf der einen dem Primärteil zugewandten Seite gekrümmt ausgeführt sind, und wobei die Permanentmagnetes jeweils nur einen vorgebbaren Teil eines magnetischen Pols τₚ bedecken und wobei die Permanentmagnete eine zu ihrer äußeren Oberfläche gerichtete im wesentlichen radiale Magnetisierungsrichtung aufweisen.

Durch den Einsatz der gegenüber dem Primärteil gekrümmten Permanentmagnete in Verbindung mit einer Teilpolkrümmung dieser Permanentmagnete und vor allem mit einer bezüglich der äußeren Oberfläche der Permanentmagnete im wesentlichen radial gerichteten Magnetisierungsrichtung werden die Kraftpendelungen deutlich reduziert. Die oben beschriebenen Maßnahmen vergleichsmäßigen das Luftspaltfeld, so dass wesentlich weniger Oberwellen enthalten sind und somit ein nahezu sinusförmiger Verlauf des Luftspaltfeldes vorliegt.

Unter einer im Wesentlichen radialen Magnetisierung, insbesondere bei gekrümmtem Oberflächen von Permanentmagneten ist zu verstehen, dass die Feldlinien dieser Permanentmagnete nicht parallel, sondern im Extremfall radial zur Oberfläche des Permanentmagneten verlaufen, ansonsten sind sie quasiradial ausgerichtet.

Die Permanentmagnete sind dabei entweder als Brotlaib oder D-förmige Permanentmagnete ausgebildet, die auf einem zumindest abschnittsweise ebenen Träger anzuordnen sind.

Ebenso können die Permanentmagnete mit zwei gekrümmten Oberflächen, also als C-förmige Permanentmagnete ausgebildet sein, wobei dann aber der Träger eine Wellenstruktur aufzuweisen hat, so dass die Permanentmagnete auf diesen Wellenkuppen dieser Wellenstruktur positioniert werden können.

Die Permanentmagnete bei C-förmiger Ausführung sind dabei entweder mit gleicher Magnetdicke oder zu den Polkanten hin mit abfallender Magnetdicke ausgeführt. Dabei liegt aber jedesmal eine im Wesentlichen radiale Magnetisierungsrichtung, auf jeden Fall aber keine parallele Magnetisierungsrichtung der Permanentmagnete vor. Der Verlauf der Feldlinien außerhalb der Permanentmagnete ist nicht parallel, sondern weist ein divergentes Verhalten auf, indem diese Feldlinien auseinanderstreben.

Bei einem zylindrischen Linearmotor, insbesondere als Teil eines Kombinationsantriebs, dessen Welle von einem rotatorischen Antrieb und einem Linearantrieb umfasst ist, mit einem Primärteil und einem Sekundärteil, der durch als Ringmagnete auf einer Welle angeordnete Permanentmagnete aufgebaut ist, liegt insbesondere eine über die axiale Ausdehnung des Sekundärteils betrachtet abwechselnde Polarität vor, d.h. die Ringmagnete sind abwechselnd mit Nord- und Südpol zum Primärteil hin ausgerichtet. Da Ringmagnete relativ schwierig zu Handhaben sind, kann jeder Ring für sich auch aus Teilschalen oder Teilringen aufgebaut sein, die zusammengesetzt einen Ringmagnet mit einer vorgebbaren Magnetisierungsrichtung, insbesondere gleicher Polarität bilden. Nord- oder Südpol des Ringmagnet oder Teile des Ringmagnets sind dabei dem Luftspalt des Linearantriebs zugewandt.

Die Erfindung sowie weitere vorteilhafte Ausgestaltungen der Erfindung sind den schematisch dargestellten Ausführungsbeispielen in der Zeichnung zu entnehmen, darin zeigen:
- FIG 1: prinzipielles Sekundärteil,
- FIG 2, 3: Ausführungsformen von Permanentmagneten,
- FIG 4: C-förmige Permanentmagnete auf einem Träger,
- FIG 5: zylindrischer Sekundärteil mit Ringmagneten,
- FIG 6: einen Kombinations-Linearantrieb.

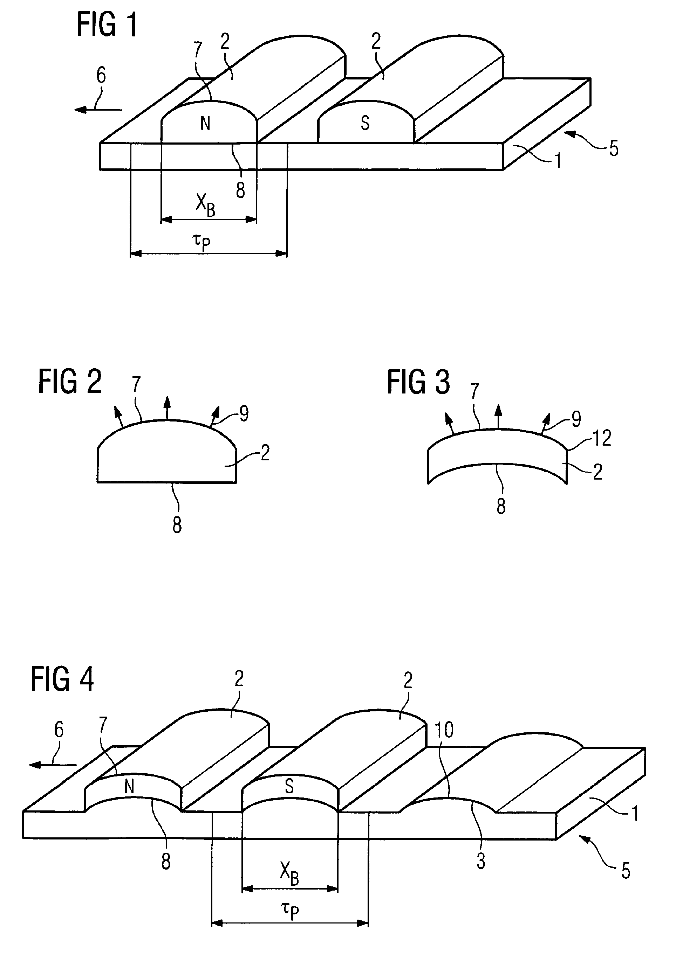

FIG 1 zeigt ein prinzipiell dargestellter Sekundärteil 5, eines nicht näher dargestellten planaren, also ebenen Linearantriebs, der einen weichmagnetischen Träger 1 zum magnetischen Rückschluss aufweist, und darauf senkrecht zu einer Bewegungsrichtung 6 des Linearantriebs angeordnete D-förmige Permanentmagnete 2, die auf dem Träger 1 positioniert, beispielsweise geklebt sind. Die Permanentmagnete 2 bedecken nur einen Teil des gesamten magnetischen Pols τₚ. Diese Teilpolbedeckung bewegt sich in einen Zahlenbereich von 0,5 x τₚ bis 0,9 x τₚ. Die Permanentmagnete 2 weisen einen zum Luftspalt gekrümmte Oberfläche 7 und eine zum Träger 1 ebene Oberfläche 8 auf.

Die in FIG 1 und den folgenden Figuren gezeigten Permanentmagnete 2 sind beispielhaft mit Nord- und Südpol bezeichnet, dabei ist jeweils nur die dem Luftspalt zugewandte Seite der Permanentmagnete 2 bezeichnet, wohlwissend, dass es keine Monopole gibt, es sich also auf der gegenüberliegenden Seite der Permanentmagnete 2 der jeweils korrespondierende Süd- bzw. Nordpol befindet.

Die korrespondierenden Gegenpole befinden sich demnach auf der dem Träger 1 bzw. einer Welle zugewandten Seite der Permanentmagnete 2, also im Bereich der Oberflächen 8.

Gemäß FIG 2 sind die D-förmigen Permanentmagnete 2 mit lediglich einer gekrümmten Oberfläche 7 ausgestattet. Die andere maßgebliche Oberfläche, innere Oberfläche 8, ist eben ausgestattet, so dass sie in dieser Ausführung lediglich auf einem zumindest abschnittsweise ebenen Träger 1 positioniert werden kann. Die Magnetisierungsrichtung 9 ist bei diesen Permanentmagneten radial bzw. quasiradial zur Oberfläche 7.

FIG 3 zeigt einen Permanentmagneten 2 der zwei gekrümmte Oberflächen 7 und 8 aufweist, wobei die Magnetisierungsrichtung 9 ebenfalls radial zur äußeren Oberfläche 7 ausgerichtet ist. Die innere Oberfläche 8 ist ebenfalls gekrümmt ausgeführt. Diese C-förmigen Permanentmagnete 2 können mit gleichem oder unterschiedlichem Radius innen und außen ausgeführt werden, so dass sich eine konstante Magnetdicke oder eine zu den Magnetkanten 12 abfallende Magnetdicke ergibt.

Sowohl die Permanentmagnete 2 nach FIG 2, als auch die Permanente 2 nach FIG 3 weisen eine Divergenz der Feldlinien auf, d.h. es liegt eine quasiradiale Vorzugsrichtung der Feldlinien vor, die zwangsläufig genau radial zur Oberfläche 7 sein muss. Die Vorzugsrichtung also die Magnetisierungsrichtung 9 ist aber auf jeden Fall nicht parallel.

FIG 4 zeigt einen Träger 1 mit einer Wellenstruktur 3, wobei auf den Wellenkuppen 10 C-förmige Permanentmagnete 2 nach FIG 3 positioniert sind. Idealerweise entspricht die Krümmung der inneren Oberfläche 8 der Permanentmagnete 2 der Krümmung der Wellenkuppe 8, so dass ein guter formschlüssiger Kontakt vorhanden ist. Auch dort ist eine Teilpolbedeckung X_{B} der Permanentmagnete 2 im Vergleich zur Polteilung τₚ vorhanden, gemäß dem Ausführungsbeispiel nach FIG 1.

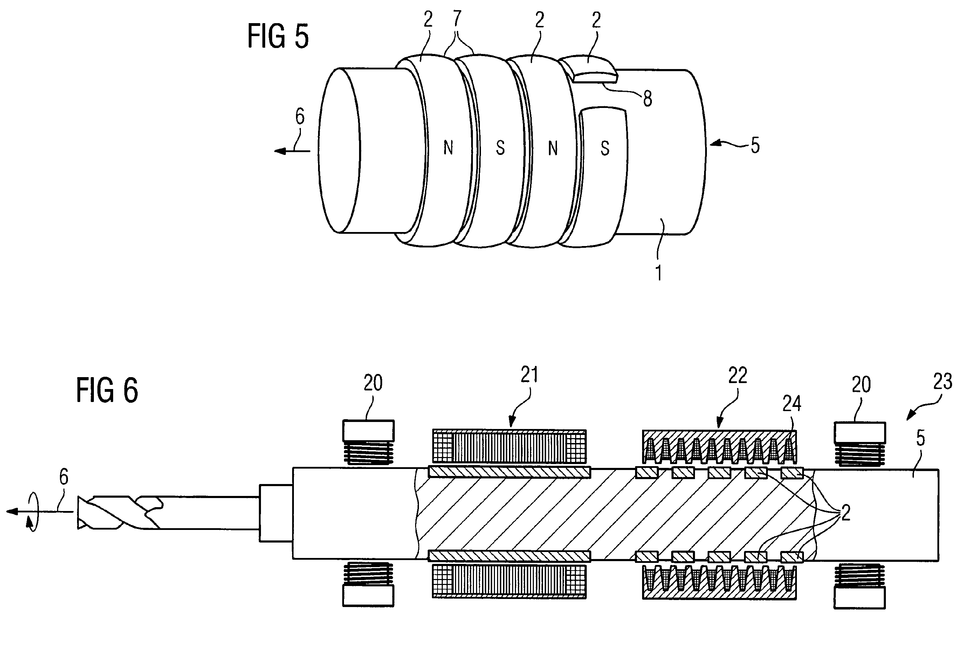

FIG 5 zeigt einen Sekundärteil 5 eines nicht näher dargestellten zylindrischen Linearmotors, der vorzugsweise Ringspulen in seinem Primärteil aufweist. Das Sekundärteil 5 ist dabei als Welle ausgebildet. Dabei ist in axialer Richtung des Sekundärteils 5 eine nach außen gerichtete abwechselnde Polarität der Permanentmagnete 2, gemäß den Figuren 1 bis 4, insbesondere der Ringmagnete vorhanden. Die Ringmagnete selbst können pro Polarität bzw. Ring aus mehreren segmentierten Teilringen bestehen, so dass die Montage erleichtert wird. Jedes Segment kann dabei beispielsweise einen Winkelbereich von ca. 120 Grad eines Umfangs des Wellenquerschnitts bedecken. Es wären damit drei Segmente notwendig, um einen kompletten Ring zu erhalten.

FIG 6 zeigt beispielhaft in prinzipieller Darstellung das Einsatzgebiet und die Bewegungsfreiheitsgrade 6 eines derartigen Sekundärteils in Kombinationsantrieben 23 oder in anderen zylindrischen Linearantrieben, wie sie im Werkzeugmaschinenbau vorkommen. Der Kombinationsantrieb 23 weist zumindest einen rotatorischen und einen linearen Antrieb auf. In dieser Hinsicht wird Bezug genommen auf die Anmeldung DE 10 2004 056 212 A1, deren Inhalt hiermit in diese Anmeldung aufgenommen wird.

Dabei wird die Welle 5 von diesen zwei Antrieben umfasst; es liegt also ein Direktantrieb vor. Der rotatorische Antrieb 21 ist für eine Rotationsbewegung zuständig, wobei auf der Welle 5 in diesem Bereich nicht näher spezifizierte Permanentmagnete, insbesondere auch mit quasiradialer Magnetisierungsrichtung vorhanden sind, die in elektromagnetischer Wechselwirkung mit einem Wicklungssystem des Stators die Rotation bewirken.

Der zylindrische Linearantrieb 22 ist durch einen Stator aufgebaut, der Ringspulen 24 aufweist, die im Wesentlichen konzentrisch um die Welle 5 verlaufen. Die Welle 5 weist in diesem Abschnitt vorteilhafterweise Permanentmagnete 2, insbesondere Ringmagnete auf, mit den oben beschriebenen Eigenschaften und der dort beschriebenen Anordnung.

Beispielhaft ist als Werkzeug des Kombinationsantriebs 23 ein Bohrer dargestellt, es sind natürlich auch wesentlich komplexere Arbeitsvorgänge und Bewegungszyklen durch derartige Antriebe realisierbar.

Um diese Bewegungszyklen auch mit größerer axialer Verschiebbarkeit der Welle 5 durchführen zu können, sind die Permanentmagnete des rotatorischen Antriebs 21, als auch die Ringmagnete 2 des linearen Antriebs 22 auf der Welle 5 über einen axialen Abschnitt verteilt, der größer als die axiale Länge des jeweiligen Stators ist.

Die Welle 5 ist dabei durch zwei Lager 20 gelagert, die als konventionelle Lager oder als Magnetlager ausgeführt sein können.

Durch die erfindungsgemäße Ausgestaltung der Permanentmagnete mit Divergenz der Feldlinien, also einer quasiradialen Anisotropie (Ausrichtung) und/oder Permanentmagnete, die in Richtung Polkante einen größeren Luftspalt aufweisen, reduzieren sich die Kraftpendelungen erheblich. D.h. die Feldlinien der Permanentmagnete verlaufen auf jeden Fall nicht parallel.

Die erfindungsgemäße Anordnung lässt sich insbesondere auch auf den rotatorischen Antrieb 21 eines Kombinationsantriebs anwenden, indem dort auch u.a. Permanentmagnete mit radialer, insbesondere quasiradialer Vorzugsrichtung, also Anisotropie bzw. Magnetisierungsrichtung (9) eingesetzt werden. Auch dort wird ein sinusförmiger Verlauf des Luftspaltfeldes angestrebt.

Der erfindungsgemäße Vorteil tritt vor allem bei kurzen Statoren des zylindrischen Linearantriebs 22 auf, die beispielsweise nur drei axial hintereinander liegende Ringspulen 24 aufweisen.

## Patentansprüche

1. Sekundärteil (5) eines Linearantriebs, insbesondere eines zylindrischen oder ebenen Linearantriebs, der auf insbesondere einem weichmagnetischen Träger (1) Permanentmagnete (2) aufweist, die insbesondere senkrecht zu der Bewegungsrichtung (6) des Linearantriebs angeordnet sind und zumindest auf der einen dem Primärteil zugewandten Seite gekrümmt ausgeführt sind, und wobei die Permanentmagnetes (2) jeweils nur einen vorgebbaren Teil eines magnetischen Pols τₚ bedecken und wobei die Permanentmagnete (2) eine zu ihrer äußeren Oberfläche (7) gerichtete im wesentlichen radiale Magnetisierungsrichtung (9) aufweisen.

2. Sekundärteil (5) eines Linearantriebs nach Anspruch 1, **dadurch gekennzeichnet, dass** der Träger (1) eben ausgebildet ist, so dass die Permanentmagnete (6) als Brotlaib oder D-förmige Permanentmagnete (2) ausgeführt sind.

3. Sekundärteil (5) eines Linearantriebs nach Anspruch 1, **dadurch gekennzeichnet, dass** der Träger (1) mit einer in Bewegungsrichtung (6) senkrecht verlaufenden Wellenstruktur (3) versehen ist, wobei die Permanentmagnete (2) auf den Wellenkuppen (10) angeordnet sind und dabei als C-förmige Permanentmagnete (2) mit zwei gekrümmten Oberflächen (7,8) ausgebildet sind.

4. Sekundärteil (5) eines Linearantriebs nach Anspruch 3, **dadurch gekennzeichnet, dass** die Permanentmagnete (2) über ihre Polbedeckung hinweg die gleiche radiale Magnetdicke aufweisen.

5. Sekundärteil (5) eines Linearantriebs nach Anspruch 3, **dadurch gekennzeichnet, dass** die Permanentmagnete (2) in Richtung der Polkanten (12) geringere Magnetdicken aufweisen.

6. Sekundärteil (5) eines Linearantriebs nach Anspruch 1, **dadurch gekennzeichnet, dass** bei einem zylindrischen Träger (1) die Permanentmagnete (2) eines magnetischen Pols ringförmig oder aus in Umfangsrichtung aneinander gereihte Teilringen einer oder wechselnder Polarität aufgebaut ist.

7. Linearantrieb mit einem Sekundärteil (5) nach zumindest einem der vorhergehenden Ansprüche **dadurch gekennzeichnet, dass** der Primärteil aus in Nuten des Primärteils angeordneten Ringspulen (24) aufgebaut ist.

8. Verwendung eines Linearantriebs nach einem der vorhergehenden Ansprüche bei Kombinationsantrieben mit zumindest einem rotatorischen Antrieb (21) und zumindest einem zylindrischen Linearantrieb (22), wobei die gleiche Welle von beiden Antrieben umfasst ist, und somit einen Direktantrieb bildet.
